Europäisches Patentamt

European Patent Office

Office européen des brevets

(19)

(11) **EP 1 202 788 B1**

(12) **EUROPEAN PATENT SPECIFICATION**

(45) Date of publication and mention
of the grant of the patent:
**12.03.2003 Bulletin 2003/11**

(21) Application number: **00951043.9**

(22) Date of filing: **15.06.2000**

(51) Int Cl.⁷: **B01D 39/00**

(86) International application number:
**PCT/US00/40201**

(87) International publication number:
**WO 00/078430 (28.12.2000 Gazette 2000/52)**

(54) **CHARGE STABILIZED ELECTRET FILTER MEDIA**

LADUNGSSTABILISIERTES ELEKTRETFILTERMATERIAL

MATERIAU FILTRANT A ELECTRET STABILISE EN CHARGE

(84) Designated Contracting States:
**AT BE CH CY DE DK ES FI FR GB GR IE IT LI LU MC NL PT SE**

(30) Priority: **17.06.1999 US 335002**

(43) Date of publication of application:
**08.05.2002 Bulletin 2002/19**

(73) Proprietor: **HOLLINGSWORTH & VOSE COMPANY**
**East Walpole, MA 02032 (US)**

(72) Inventor: **COX, Stephen, Todd**
**Radford, VA 24141 (US)**

(74) Representative: **Casey, Lindsay Joseph**
**F. R. Kelly & Co.**
**27 Clyde Road**
**Ballsbridge**
**Dublin 4 (IE)**

(56) References cited:
**WO-A-99/16532**      **US-A- 5 401 446**
**US-A- 5 645 627**

**Description**

**Background of the Invention**

This invention relates to electret filter media having enhanced charge stability.

Electret filter media have long been used in many filtration applications. Electret filter media are those that include a dielectric insulating polymer web that is treated to possess substantially permanent spatially oriented, opposite charge pairs or dipoles. Among the common polymer webs used for electret filter media are polypropylene, polyethylene, polyester, polyamide, polyvinyl chloride, and polymethyl methylacrylate.

Conventional filter media are substantially lacking in electrostatic charge and rely upon impingement, impaction and diffusion for filter performance. Electret filter materials offer improved filtering performance over conventional filter materials. The presence of oriented dipoles in the electret filter media is believed to enhance filter performance by allowing the filter media to attract and retain charged and uncharged particles to be filtered.

Electret filter materials are made by a variety of known techniques. One technique for manufacturing electret filter media involves extruding a polymer, typically having a high melt flow index, through a die having a linear array of orifices. An air knife is used to attenuate the extruded polymer fibers by a ratio of about 300:1. The attenuated fibers, having diameters of about one to ten micrometers, are collected on a rotating drum or moving belt using a moderate vacuum. The fiber web is then treated to impart on the fiber web charge pairs or dipoles. The charge pairs or dipoles can be imparted to the fiber, for example, using AC and/or DC corona discharge.

One problem associated with electret filter material is that the charge pairs or dipoles imparted to the filter media often are not stable. In some instances, charge or its spatial orientation is lost after filtering certain contaminants for relatively short time periods. The result is a marked decrease in filter performance over a relatively short period of time (e.g., less than 20 minutes). The National Institute of Safety and Health (NIOSH) has established standards for performance of certain filters. The NIOSH standards evaluate filters in a carrier after a 200 milligram filtration challenge. One challenge, of solid aerosol particles, evaluates filter performance against solid sodium chloride particles suspended in air. Another challenge, of liquid aerosol particles, evaluates filter performance against liquid droplets of dioctyl phthalate (DOP) suspended in air. Electret filter media generally are able to maintain charge stability and filter performance when filtering solid aerosols, including the sodium chloride test standard. However, liquid aerosols tend to degrade the charge on the electret filter media, and thus filter performance diminishes after only a short period of filtration.

There is thus a need for electret filter media having improved charge stability that are able to maintain acceptable filter performance over time.

**Summary of the Invention**

The present invention circumvents the problems described above by providing a fiber web which retains particles and/or oil without significant reduction in filtration performance even after prolonged filtration challenges. In a particular embodiment, the filter media of the present invention is an electret polymeric fiber web that includes a charge stabilizing additive. Accordingly, the present invention provides charge stabilized electret filter media useful for industrial face masks. The invention also provides filter media which have enhanced filtration performance characteristics.

The invention provides filter media which includes a melt blown electret polymer fiber web having a melt processable fatty acid amide present within the web. Typically, the melt processable amide is present at a concentration in a range from greater than 2.0% to about 20% by weight, generally between about 5 to 11% by weight, preferably about 8% by weight. Suitable melt processable fatty acid amides, e.g., nonionic fatty acid amides, include stearamides or ethylene bis-stearamides, e.g., ACRAWAX®C. In a preferred embodiment the filter media is annealed.

The electret polymer fiber web can be made from a variety of polymeric materials, including polypropylene, polyester, polyamide, polyvinyl chloride, polymethylmethacrylate, and polyethylene. Polypropylene is among the more preferred polymeric materials. Typically, the polymer fibers that form the web have a diameter in the range of about 1 to 20 micrometers and the weight of the polymer fiber web is in the range of about 10 to 520g/m$^2$.

The electret filter media of this invention is characterized by improved filtration performance and enhanced charge stability of the electret polymer web. In particular, the filter media is able to provide desirable filtration properties, as indicated by alpha value, despite continued filtration challenge. In one embodiment, the filter media meets the NIOSH standard for class P 95 nonwoven filter media. In another embodiment, the filter media meets the NIOSH standard for class P 99 nonwoven filter media. Preferably, the filter media meets the NIOSH standard for class P 100 nonwoven filter media.

In another aspect, the invention is drawn to a respirator having a filter element with a melt blown electret polymer fiber web. The fiber web includes a melt processable fatty acid amide present within the web, wherein the melt processable amide is present at a concentration in a range from greater than 2.0% to about 20% by weight, preferably about 8%. In a preferred embodiment the fiber web is annealed.

In another aspect the invention relates to a method of manufacturing an electret filter material. According to this aspect of the invention a polymer resin, having incorporated therein a charge stabilizing additive, e.g., a melt processable nonionic fatty acid amide of the type noted above, is processed to yield a web of melt blown polymer fiber in which the additive is present at a concentration range of about 1.0 to about 20% by weight. Subsequently, the web is treated to form permanent dipoles in the melt blown polymer web. The permanent dipoles can be imparted to the web by a variety of techniques including AC corona or DC corona discharge and combinations thereof. In a preferred embodiment the manufacturing process can be modified by heat treating the polymer web, which has incorporated therein a melt processable fatty acid amide additive, after charging the material by AC and/or DC corona discharge.

The filter material of the present invention can be used in a variety of filtration applications in which a relatively stable alpha value is desired. Among the uses for such filter media are industrial face masks, ASHRAE filters, HEPA filters, and ULPA filters.

Other advantages of the invention will be readily apparent to one having ordinary skill in the art upon reading the following description.

All percentages by weight identified herein are based on the total weight of the web unless otherwise indicated.

### Brief Description of the Drawings

Other objects, advantages and features of the present invention will be readily appreciated as the same becomes better understood by reference to the following detailed description when considered in connection with the accompanying drawings, in which like reference numerals designate like parts throughout the figures thereof and wherein:

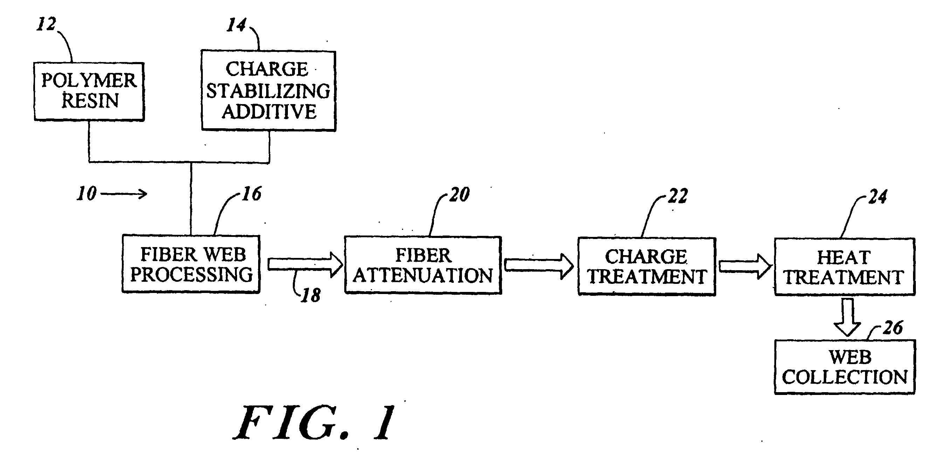

FIG. 1 is a flow chart illustrating a process for manufacturing electret filter media according to the invention.

### Detailed Description of the Invention

The features and other details of the invention will now be more particularly described and pointed out in the claims. It will be understood that the particular embodiments of the invention are shown by way of illustration and not as limitations of the invention. The principle features of this invention can be employed in various embodiments without departing from the scope of the invention.

The present invention is based, at least in part, on a discovery that the present invention provides electret filter media that have improved charge stability. The charge stability is manifested by acceptable alpha levels, with minimal alpha decay, when the filter media are subjected to solid and/or liquid aerosol challenges. In instances where alpha decay occurs, the final alpha value is still indicative of acceptable filter performance. The filter media of the invention include an electret polymer fiber web that includes at least one charge stabilizing additive, e.g., a fatty acid amide, and mixtures of two or more fatty acid amides.

Examples of charge stabilizing additives include fatty acid amides derived from fatty acids. The term "fatty acid" is recognized by those having ordinary skill in the art and if is intended to include those saturated or unsaturated straight chain carboxylic acids obtained from the hydrolysis of fats. Examples of suitable fatty acids include lauric acid (dodecanoic acid), myristic acid (tetradecanoic acid), palmitic acid (hexadecanoic acid), stearic acid (octadecanoic acid), oleic acid ((Z)-9-octadecenoic acid), linoleic acid ((Z,Z)-9,12-octadecadienoic acid), linolenic acid ((Z,Z,Z)-9,12,15-octadecatrienoic acid) and eleostearic acid (Z,E,E)-9,11,13-octadecatrienoic acid). Typically the amides formed from the above referenced acids are primary amides which are prepared by methods well known in the art.

Secondary and tertiary fatty acid amides are suitable as charge stabilizing agents wherein the amide nitrogen is substituted with one or more alkyl groups. Secondary and tertiary fatty acid amides can also be prepared by methods well known in the art, such as by esterification of a fatty acid followed by an amidation reaction with a suitable alkylamine. The alkyl substituents on the amide nitrogen can be straight chain or branched chain alkyl groups and can have between about two and twenty carbon atoms, inclusive, preferably between about two and 14 carbon atoms, inclusive, more preferably between about two and six carbon atoms, inclusive, most preferably about two carbon atoms. In a preferred embodiment, the fatty acid amide can be a "bis" amide wherein an alkyl chain tethers two nitrogens of two independcnt amide molecules. For example, alkylene bis-fatty acid amides include alkylene bis-stearamides, alkylene bis-palmitamides, alkylene bis-myristamides and alkylene bis-lauramides. Typically the alkyl chain tether includes between about 2 and 8 carbon atoms, inclusive, preferably 2 carbon atoms. The alkyl chain tether can be branched or unbranched. Preferred bis fatty acid amides include ethylene bis-stearamides and ethylene bis-palmitamides such as N,N'-ethylenebisstearamide and N,N'-ethylenebispalmitamide.

In certain embodiments, the charge stabilizing additive, e.g., a fatty acid amide, can be present within the polymer fiber web at a concentration in the range of about 1.0 to 20% by weight. In other embodiments, the charge stabilizing additive can be present within the polymer fiber web at a concentration in the range of greater than 2.0% to about 20% by weight. A preferred concentration range for the fatty acid amide charge stabilizing additive is in the range of about 5% to about 11% by weight of the web, preferably about 8%. The ranges of concentrations intermediate to those listed are also intended to be part of this invention, e.g., about 2.5% to about 17%, 4.0% to about 15%, and about 6.0% to about 12.0% by weight. For example, ranges of concentration using a combination of any of the above values recited as upper and/or lower limits are intended to be included, e.g., 1% to about 6%, 2.5 to about 12%, etc.

One type of useful charge stabilizing additives, as noted above, are fatty acid amides. Examples of preferred fatty acid amides include stearamide and ethylene bis-stearamide. An exemplary stearamide is commercially available as UNIWAX 1750, available from UniChema Chemicals, Inc. of Chicago, Illinois. ACRAWAX® C is an ethylene bis-stearamide which is commercially available from Lonza, Inc. of Fair Lawn, New Jersey. ACRAWAX® C contains N, N'-ethylenebissteramide (CAS No. 110-30-5) and N,N'-ethylenebispalmitamide (CAS No. 5518-18-3) with a mixture of C-14 to C-18 fatty acid derivatives (CAS No. 67701-02-4) with an approximate ratio of 65/35/2 (N, N'-ethylenebissteramide/N,N'-ethylenebispalmitamide/ mixture of C-14 to C-18 fatty acid derivatives) by weight. For example, the commercial product includes N,N'-ethylenebisstearamide, N,N'-ethylenebispalmitamide with C14-C18 fatty acids. In certain embodiments of the invention, either N,N'-ethylenebisstearamide or N,N'-ethylenebispalmitamide can be the sole charge stabilizing additive. In another embodiment, the ratio of a C14-C18 fatty acid can be varied from between about 0 to 20% based on the total amount of the bisamides. In still other embodiments, mixtures of N,N'-ethylenebisstearamide and N,N'-ethylenebispalmitamide which fall in the range between about 0 to 100% for each bisamide can be utilized'as additive mixtures, e.g., 80/20, 70/30, 5/50, etc.

The polymers used to form the fibers of the web can be selected from among many suitable polymers. Examples of these polymers include polyethylene, polyester, polyamide, polyvinyl chloride, and polymethyl methylacrylate and, preferably, polypropylene.

One of ordinary skill in the art will appreciate that melt blown webs are comprised of filters having a relatively broad distribution of fiber diameters. The average fiber diameter of the polymer used to form the polymer fiber web generally is in the range of about 1 to about 20 micrometers, inclusive. Depending on the intended application, a more preferred average polymer fiber diameter is in the range of about 3 to about 15 micrometers, inclusive, more preferably between about 5 to about 10 micrometers, inclusive.

The web basis weight of the polymer fiber web will vary depending upon the requirements of a given filtering application. In general, higher web basis weights yield better filtration, but there exists a higher resistance, or pressure drop, across the filter barrier when the filter media has a higher basis weight. For most applications the web basis weight can be in the range of between about 10 to about 520 $g/m^2$, inclusive. Preferably the web weight is in the range of between about 30 to about 400 $g/m^2$, inclusive, more preferably between about 30 to about 200 $g/m^2$. One of ordinary skill in the art can readily determine the optimal web basis weight, considering such factors as the desired filter efficiency and permissible levels of resistance. Furthermore, the number of plies of the polymer fiber web used in any given filter application can also vary from approximately 1 to 10 plies. One of ordinary skill in the art can readily determine the optimal number of plies to be used.

Filter performance is evaluated by different criteria. It is desirable that filters, or filter media, be characterized by low penetration across the filter of contaminants to be filtered. At the same time, however, there should exist a relatively low pressure drop, or resistance, across the filter. Penetration, often expressed as a percentage, is defined as follows:

$$Pen = C/C_0$$

where C is the particle concentration after passage through the filter and $C_0$ is the particle concentration before passage through the filter. Filter efficiency is defined as

$$100 - \% \text{ Penetration.}$$

Because it is desirable for effective filters to maintain values as low as possible for both penetration and pressure drop across the filter, filters are rated according to a value termed alpha ($\alpha$), which is the slope of log penetration versus pressure drop across the filter. Steeper slopes, or higher alpha values, are indicative of better filter performance. Alpha is expressed according to the following formula

$$\alpha = -100 \log (C/C_0)/D \, P,$$

where D P is the pressure drop across the filter.

In many filtering situations it is important to have a high initial alpha value. However, it is equally, if not more important, to maintain acceptable alpha values well into the filtration process. Decaying alpha values is, as noted above, a problem often encountered in certain filtration procedures. In many instances it is thus important to achieve acceptable alpha values well into the filtering process. Some standard tests for evaluating filter performance focus on penetration and resistance (as related by alpha value) after 200 milligrams of loading. Alpha decay is generally not a problem in filtering gases that contain only solids. In fact, in such filtering applications the alpha value often increases over time. The phenomenon of alpha decay is more evident while filtering gases that contain liquid droplets or a mixture of liquid droplets and solid particles.

An exemplary DOP challenge employs an automated filter testing unit purchased from TSI, Inc. equipped with an oil generator. The instrument measures pressure drop across filter media and the resultant penetration value on an instantaneous or "loading" basis at a flow rate less than or equal to 115 liters per minute (lpm). Instantaneous readings are defined as 1 pressure drop / penetration measurement. A "loading" is defined as a continuous series of pressure drop/ penetration measurements, occurring approximately once every minute, until the desired challenge is reached. The challenge is calculated by knowing the flow rate and mass concentration of the insulting agent, e.g., dioctyl phthalate.

In examples provided *infra,* a flow rate of 85 1pm and a test filter area of 170 cm$^2$ were used. The filtration media was placed within the instrument and closed for a 200 milligram DOP loading. The pressure drop and penetration values were recorded approximately every minute until the desired loading was achieved. The final penetration and resistance value, as well as, the overall efficiency decay, fell within the parameters established by NIOSH.

This DOP test is based on NIOSH standards as codified in 42 C.F.R. § 84 for filter classes where the three levels of filter efficiency are 95%, 99% and 99.97%. Categories for resistance to filter efficiency degradation are N (not resistant to oil, e.g., DOP), R (resistant to oil) and P (oil proof). Therefore, nonwoven filter media of the present invention meet NIOSH classifications of P 95 (95% oil proof by challenge), P 99 (99% oil proof by challenge) and P 100(99.97% oil proof by challenge).

One of ordinary skill in the art will recognize the need to balance particle penetration across a filter with the resistance to which the filter is subjected during filtration. In addition, it is also necessary to balance high initial alpha values with the alpha values after some degree of filtration challenge. The concentration of charge additives used according to the present invention as well as the identity of the charge additives can be varied to achieve optimal performance of electret filter media.

The present invention provides filter media which include a melt blown electret polymer fiber web having a melt processable fatty acid amide present within the web at a concentration in the range from greater than 2.0% to about 20% by weight.

The present invention also provides filter media which include an annealed melt blown electret polymer fiber web having a melt processable fatty acid amide present within the web at a concentration in the range between about 1.0% to about 20 by weight.

In another embodiment, the present invention provides respirators having a filter element comprising a melt blown electret polymer fiber web. The melt blown electret polymer fiber web includes a melt processable fatty acid amide present within the web, wherein the amide is present at a concentration in a range from greater than 2.0% to about 20% by weight.

In yet another embodiment, the present invention provides respirators having a filter element including an annealed melt blown electret polymer fiber web. The melt blown electret polymer fiber web includes a melt processable fatty acid amide present within the web, wherein the amide is present at a concentration in a range from between about 1.0% to about 20%, inclusive, by weight.

The term "within" refers to the melt processable fatty acid amide which is intimately dispersed throughout the fiber web fibers which make up the polymeric fiber web. For example, the melt processable fatty acid amide is thoroughly mixed with the polymer resin to form a polymer pellets which are able to be extruded into fibers which include the amide throughout the fiberous structure. Those having ordinary skill in the art will appreciate that the fatty acid amide can be incorporated into a polymer resin in a number of ways. In one example, the fatty acid amide can be combined with polymer resin using a two screw extruder, yielding pellets with a concentrated amount of the amide. These concentrated pellets can then be combined with polymer pellets having no amide additive in an extrusion process that yields the desired polymer fiber web.

Filter efficiency and properties of the electret filter media of the invention can also be optimized through additional processing techniques. In one embodiment the polymer web, which has incorporated therein the charge stabilizing additive, can be heat treated after the web is charged or treated to form a permanent dipole. Heat treating the web at this stage of the manufacturing process can enhance the charge stability in the resulting filter media. Heat treatment can usually be conducted at temperatures in the range of about 65°C to about 232°C, inclusive, preferably between about 121°C to about 165°C, inclusive for approximately between about 0.25 minutes to about 5 minutes, inclusive, more preferably between about 1.5 minutes and about 3 minutes. Such a post-charging heat treatment technique is particularly useful to enhance filter performance.

Preferably, heat treatment is applied to the electret filter after charging or formation of the permanent dipoles. Such heat treatment can result in a lower initial alpha, but the alpha values after a degree of filter loading tend to be higher than those achieved with filter materials that do not receive heat treatment. Heat treatment of the electret filter can be accomplished by methods known in the art, such as infrared heaters, microwave heaters, oil or water heated rollers, convention ovens. Preferably, the step of heat treating, e.g., annealing, is performed by convection, thereby affording uniform annealing of the melt blown fiber web which contains the melt processable fatty acid amide within the web.

Heat treatment after charging is preferably conducted at temperatures in the range of about 65°C to about 232°C, inclusive, preferably between about 121°C and about 165°C, inclusive for a period of between about 0.25 minutes and about 5 minutes, inclusive, preferably between about 1.5 minutes and about 3 minutes, inclusive. A preferred protocol involves heat treating for approximately 2.5 minutes at 143°C. In general, the fatty acid amide appears to be more sensitive to the effects of post-charging heat treatment than are other classes of charge stabilizing additives. Thus, it is preferred that the filter media be subjected to post-charging heat treatment.

A variety of techniques are well known to impart a permanent dipole to the polymer web in order to form electret filter media. Charging can be effected through the use of AC and/or DC corona discharge units and combinations thereof. The particular characteristics of the discharge are determined by the shape of the electrodes, the polarity, the size of the gap, and the gas or gas mixture. In one embodiment charging can be accomplished solely through the use of an AC corona discharge unit. In another embodiment it is useful to use both AC and DC corona discharge units. In a preferred technique the polymer web is first subjected to AC corona discharge followed by one or more successive treatments by a DC corona discharge unit. Charging can also be accomplished using other techniques, including friction-based charging techniques. Typically the fiber web is subjected to a discharge of between about 1 to about 30 kV (energy type, e.g., DC discharge or AC discharge)/cm, inclusive, preferably between about 10 kV/cm and about 30 kV/cm, inclusive, with a preferred range of between about 10 to about 20 kV/cm, inclusive.

It will be appreciated by one skilled in the art that corona unit(s), AC corona discharge unit(s) and/or DC corona discharge unit(s) can be placed above and/or below a meltblown fiber web to impart electret properties to the fiber web. Configurations include placement of a neutrally grounded roll(s) on either side of the fiber web and the active electrode(s) above or below either side of the web. In certain embodiments, only one type of corona discharge unit, e. g., a DC or an AC corona discharge unit, is placed above, below or in an alternating arrangement above and below the fiber web. In other embodiments alternating AC or DC corona discharge units can be used in combination. The AC or DC corona discharge unit can be controlled so that only positive or negative ions are generated.

In one embodiment, a permanent dipole can be imparted to the polymer fiber web as follows. The web is first charged using an AC corona, followed by a charging with a series of DC corona discharge units, e.g., DC charge bars. The DC corona discharge units are positioned on alternating sides of the passing fiber web and each successive DC corona discharge unit applies a charge of a different polarity, i.e., positive/negative. In a preferred embodiment, the charge of the DC corona discharge units located above and below the nonwoven web alternates from positive to negative in a series of treatments, e.g., 2, 4, 6, etc. Alternatively, the DC corona discharge units are positive or negative and do not alternate in charge.

An example of a process for producing electret properties in fiber webs can be found in U.S. Patent 5,401,446, and U.S. Patent 5,645,627.

Methods to prepare electret filter media are also part of the present invention. In one embodiment, the methods include providing a polymer resin having a charge stabilizing fatty acid amide incorporated therein. A web of melt blown polymer fibers is produced from the polymer resin, in which the charge stabilizing fatty acid amide is present in a concentration at greater than 2% to about 20% by weight. The web is then treated to form substantially permanent charge pairs or dipoles in the melt blown polymer web.

In another embodiment, the methods include manufacturing an annealed electret filter media by providing a polymer resin having a charge stabilizing fatty acid amide incorporated therein. The web of melt blown polymer fibers is produced from the polymer resin, in which the concentration of charge stabilizing additive is between about 1% to about 20% by weight. The web is treated to form substantially permanent charge pairs or dipoles in the melt blown polymer web and the resulting melt blown polymer web is treated at an elevated temperature to form an annealed melt blown polymer web.

One useful technique for processing the electret web of the invention is illustrated in Figure 1. As illustrated, the filter media can be prepared by forming, such as in an extruder 16, a web of melt blown polymer film from a polymer resin 12, such as polypropylene. The resin includes, in concentrated form, a desired amount of the charge stabilizing additive 14, e.g., a fatty acid amide as described *supra.* The resulting web 18 can be attenuated at processing station 20, such as by drawing the fibers at a ratio of about 300:1. Thereafter, the web is subjected to charge treatment at station 22 (which can be a corona unit, an AC discharge unit, a DC corona discharge unit or combinations thereof) to form substantially permanent charge pairs or dipoles in the melt blown polymer web. In some instances it may be preferred to use an AC corona discharge unit followed by a DC corona discharge unit at processing station 22. Alternatively, charging can be effected using an AC corona discharge unit followed by one or more successive treatments in a DC corona discharge unit. Charging can also be accomplished using other techniques, including friction-based techniques. After charging, the web is heat treated at station 24 and collected at station 26.

Subsequent to forming and charging the electret filter media, and as noted above, the media can be subjected to heat treatment to improve charge retention properties of the media. For example, heat treatment may take place at temperatures in the range of between about 65°C to about 232°C, inclusive, for approximately 0.25 minutes to about 5 minutes, inclusive. A preferred heat treatment protocol exposes the media to temperatures in the range of about 143°C for 2.5 minutes.

In another embodiment the charge stabilizing additive need not be included as a concentrate with the polymer resin. Instead, a liquid form of the additive or additive mixture can be sprayed onto the extruded fibers that form the polymer web.

The following examples serve to further described the invention.

**Examples**

A polypropylene fatty acid amide annealed electret fiber web was prepared by the following process. Approximately 41.73 kg (92 pounds) of polypropylene resin was melt blended with approximately 3.63 kg (8 pounds) of ACRAWAX® C at a temperature between about 149°C and about 285°C for approximately 4 minutes prior to extrusion into a spinnerette.

Typically, the polymer/ACRAWAX melt blend is heated in an extruder to a temperature of between about 149°C (300°F) to about 285°C (545°F) in an extruder heated to about 285°C (545°F). The polymer melt blend is passed through a connecting hose to a melt pump and is maintained at an elevated temperature, e.g., about 285°C (545°F). The polymer melt blend is then passed into a die body, e.g., a spinnerette, maintained at about 285°C (545°F) and fed through die tips, thereby forming fibers. The fibers are then cooled to a temperature of between about 30°C and 45°C, preferably about 37°C, e.g., quenched by cool air or water.

The resultant fibers are sprayed onto a collecting roll, e.g., a rotating drum or belt, with suction, thereby forming a nonwoven web about approximately 1.83m (72 inches) wide having a fiber diameter of between about 2.5 and about 5 μm and a weight of between about 25 g/m$^2$ and 35 g/m$^2$, inclusive. Typically, the fibers are collected onto a rotating drum with suction at a line speed of about 10.16 cm.s$^{-1}$ (20 feet per minute) to about 101.6 cm.s$^{-1}$ (200 feet per minute), inclusive preferably between about 15.24 cm.s$^{-1}$ (30 feet/min) and about 40.64 cm.s$^{-1}$ (80 feet/min), inclusive.

The nonwoven web is then immediately AC corona discharge treated. Typically the apparatus is configured such that the nonwoven web is passed through a gap formed between an electrode and silicone sleeve portion of the corona unit. The gap width between the electrode and silicone sleeve of the corona unit is between about 1.016 mm (4 hundredths of an inch (0.04 inches)) to about 6.35 mm (0.25 inches), preferably about 2.032 mm (8 hundredths of an inch (0.08 inches)), inclusive. Typically, the corona charge applied to the nonwoven web is between about 0 and about 0.9 kilowatts/cm, preferably between about 0.25 and about 0.50 kilowatts/cm, inclusive; between about 0 and about 30 kilovolts/cm, inclusive, preferably between about 20 kilovolts/cm and about 30 kilovolts/cm. The total wattage applied to the nonwoven is dependent upon the energy expended by the discharge unit per area/at a given line speed. In this instance, the maximum output of the corona discharge unit was between 0 and 1 kilowatt. Treatment times with the corona charge are between about 0.05 seconds and about 0.005 seconds, preferably between about 0.03 seconds and about 0.01 seconds, inclusive, dependent upon line speed.

The nonwoven corona treated web is immediately thereafter treated with DC corona discharge, e.g, by DC charge bars, between about 0 and about 30 kilovolts/cm, inclusive, preferably between about 20 kilovolts/cm and about 30 kilovolts/cm, inclusive, between about 0 and about 3 milliamperes, inclusive, and between about 6 seconds and between about 0.06 seconds, inclusive, preferably between about 4 seconds and about 1.5 seconds, inclusive, depending on line speed. During the corona and DC discharge treatments, the temperature of the surrounding process area is maintained at or below 90°F with the relative humidity at or below 60%, preferably below 50%, most preferably below 40%.

The melt blown electret polymer fiber web including a melt processable fatty acid amide within the fiber structure, optionally, can be treated in a further step to anneal the nonwoven web. Typically the nonwoven web is passed through a convection oven at between about 120°C and about 160°C, inclusive, preferably between about 135°C and 145°C, inclusive, with a dwell time of between about 1 minute and 10 minutes, preferably between about 2 minutes and about 3 minutes, inclusive.

Nonwoven melt blown fiber web samples showed excellent oil resistance as determined by the above described DOP challenge test as shown in Table I.

Table I

| Trial Number | Oven Temperature °C (°F) | Speed (fpm) m/s | No. of Ply * | P Value |
|---|---|---|---|---|
| 1 | 140 (284) | 0.085 (16.8) | 6 | 99 |
| 2 | 151 (304) | 0.085 (16.8) | 6 | 95 |
| 3 | 153.9 (309) | 0.085 (16.8) | 4,5 | 4 ply did not meet P 95 5 ply: 95 |
| 4 | 151 (304) | 0.085 (16.8) | 5 | 95 |
| 5 | 151 (304) | 0.076 (15) | 5 | 95 |
| 6 | 146.1 (295) | 0.085 (16.8) | 5 | 95 |
| 7 | 143.3 (290) | 0.085 (16.8) | 5 | 95 |

All trials were prepared as single layers through the oven system. The material was hand-plied after heat treatment for dioctyl phthalate (DOP) analysis as described above.

Those skilled in the art will know, or be able to ascertain, using no more than routine experimentation, many equivalents to the. specific embodiments of the invention described herein.

**Claims**

1. A filter media comprising a melt blown electret polymer fiber web having a melt processable fatty acid amide present within said web, wherein said amide is present at a concentration in a range from about 5% to about 20% by weight.

2. A filter media comprising an annealed melt blown electret polymer fiber web having a melt processable fatty acid amide present within said web, wherein said amide is present at a concentration from about 5% to about 20% by weight.

3. A filter media as claimed in claim 1 or claim 2, wherein said electret polymer fiber web is a polypropylene.

4. A filter media as claimed in any of claims 1-3, further **characterized by** enhanced charge stability of said electret polymer fiber web.

5. A filter media as claimed in any of claims 1-4, wherein said filter media has a filter efficiency and degradation value of

   (a) at least P 95; or
   (b) at least P 99; or
   (c) at least P 100.

6. A filter media as claimed in any of claims 1-5, wherein said concentration of said fatty acid amide is

   (a) between about 5% and 11%; or
   (b) present at about 8%.

7. A filter media as claimed in any of claims 1-6, wherein said fatty acid amide is either a stearamide, ethylene bis-stearamide, or mixtures thereof.

8. A filter media as claimed in any of claims 1-7, wherein polymer fibers of said polymer fiber web have a diameter in the range of about 1 to 20 μm.

9. A filter media as claimed in any of claims 1-8, wherein the weight of said polymer fiber web is in the range of about 10 to 520g/m$^2$.

10. A respirator having a filter element comprising a melt blown electret polymer fiber web having a melt processable fatty acid amide present within said web, wherein said amide is present at a concentration in a range from about 5% to about 20% by weight.

11. A respirator having a filter element comprising an annealed melt blown electret polymer fiber web having a melt processable fatty acid amide present within said web, wherein said amide is present at a concentration in a range from about 5% to about 20%, inclusive, by weight.

12. A respirator as claimed in claim 10 or claim 11, wherein said concentration of said fatty acid amide is between about 5% and 11%

13. A respirator as claimed in any of claims 10-12, wherein said concentration of said fatty acid amide is about 8%.

14. A respirator as claimed in any of claims 10-13, wherein said fatty acid amide is either stearamide, ethylene bis-stearamide, or mixtures thereof.

15. A method for manufacturing an electret filter media comprising the steps of:

   providing a polymer resin having a charge stabilizing fatty acid amide incorporated therein;
   producing a web of melt blown polymer fibers from said polymer resin, in which said charge stabilizing amide is present at a concentration from about 5% to about 20% by weight; and
   treating said web to form substantially permanent charge pairs or dipoles in said melt blown polymer web.

16. A method as claimed in claim 15, wherein said fatty acid amide is a stearamide, ethylene bis-stearamide or mixtures thereof.

17. A method as claimed in claim 15 or claim 16, wherein said polymer resin is a polypropylene.

18. A method as claimed in any of claims 15-17, wherein the step of treating said web is performed using AC and/or DC corona discharge.

19. A method as claimed in claim 18, further comprising the step of treating said resulting melt blown polymer web at a temperature in the range between about 120°C to 160 °C, inclusive, for between about 1 to 10 minutes, inclusive.

20. A method as claimed in claim 18, further comprising the step of heat treating said melt blown polymer web at a temperature in a range between about 135°C to 145°C, inclusive, for between about 2 minutes to about 3 minutes, inclusive, following said step of treating said web by AC and/or DC corona discharge.

21. A method for manufacturing an annealed electret filter media comprising the steps of:

   providing a polymer resin having a charge stabilizing fatty acid amide incorporated therein;
   producing a web of melt blown polymer fibers from said polymer resin, in which said charge stabilizing amide is from about 5% to about 20% by weight;
   treating said web to form substantially permanent charge pairs or dipoles in said melt blown polymer web; and
   treating said resulting melt blown polymer web at an elevated temperature, thereby annealing said resultant melt blown polymer web.

22. A method as claimed in claim 21, wherein said fatty acid amide is a stearamide, ethylene bis-stearamide, or mixtures thereof.

23. A method as claimed in claim 21 or claim 22, wherein said polymer resin is a polypropylene.

24. The method as claimed in any of claims 21-23, wherein the step of treating said web is performed using AC and/or DC corona discharge.

25. A method as claimed in any of claims 21-24, wherein said elevated temperature is in the range between

   (a) about 120°C to 160 °C, inclusive, and is maintained for between about 1 minute to about 10 minutes, inclusive; or

(b) about 135°C to 145°C, inclusive, and is maintained for between about 2 minutes and about 3 minutes, inclusive.

**Patentansprüche**

1. Filtermedium, das ein schmelzgeblasenes Elektretpolymerfasergewebe umfasst, das ein in dem Gewebe vorhandenes schmelzverarbeitungsfähiges Fettsäureamid aufweist, wobei das Amid in einer Konzentration im Bereich von etwa 5 bis etwa 20 Gewichtsprozent vorliegt.

2. Filtermedium, das ein getempertes schmelzgeblasenes Elektretpolymerfasergewebe umfasst, das ein in dem Gewebe vorhandenes schmelzverarbeitungsfähiges Fettsäureamid aufweist, wobei das Amid in einer Konzentration von etwa 5 bis etwa 20 Gewichtsprozent vorliegt.

3. Filtermedium nach Anspruch 1 oder 2, wobei das Elektretpolymerfasergewebe ein Polypropylen ist.

4. Filtermedium nach einem der Ansprüche 1 bis 3, das weiterhin durch eine verbesserte Ladungsstabilität des Elektretpolymerfasergewebes gekennzeichnet ist.

5. Filtermedium nach einem der Ansprüche 1 bis 4, wobei das Filtermedium einen Filterwirkungsgrad und einen Degradationswert von

    (a) mindestens P 95; oder
    (b) mindestens P 99; oder
    (c) mindestens P 100 aufweist.

6. Filtermedium nach einem der Ansprüche 1 bis 5, wobei die Konzentration des Fettsäureamids

    (a) zwischen etwa 5% und 11%; oder
    (b) etwa 8% beträgt.

7. Filtermedium nach einem der Ansprüche 1 bis 6, wobei das Fettsäureamid entweder ein Stearamid, ein Ethylenbisstearamid oder Mischungen davon ist.

8. Filtermedium nach einem der Ansprüche 1 bis 7, wobei Polymerfasern des Polymerfasergewebes einen Durchmesser im Bereich von etwa 1 bis 20 µm aufweisen.

9. Filtermedium nach einem der Ansprüche 1 bis 8, wobei das Gewicht des Polymerfasergewebes im Bereich von etwa 10 bis 520 g/m$^2$ liegt.

10. Atemschutzmaske, die ein Filterelement aufweist, das ein schmelzgeblasenes Elektretpolymerfasergewebe umfasst, das ein in dem Gewebe vorhandenes schmelzverarbeitungsfähiges Fettsäureamid aufweist, wobei das Amid in einer Konzentration im Bereich von etwa 5 bis etwa 20 Gewichtsprozent vorliegt.

11. Atemschutzmaske, die ein Filterelement aufweist, das ein getempertes schmelzgeblasenes Elektretpolymerfasergewebe umfasst, das ein in dem Gewebe vorhandenes schmelzverarbeitungsfähiges Fettsäureamid aufweist, wobei das Amid in einer Konzentration im Bereich von etwa 5 bis etwa 20 Gewichtsprozent einschließlich vorliegt.

12. Atemschutzmaske nach einem der Ansprüche 10 oder 11, wobei die Konzentration des Fettsäureamids zwischen 5% und 11% beträgt.

13. Atemschutzmaske nach einem der Ansprüche 10 bis 12, wobei die Konzentration des Fettsäureamids etwa 8% beträgt.

14. Atemschutzmaske nach einem der Ansprüche 10 bis 13, wobei das Fettsäureamid entweder ein Stearamid, ein Ethylenbisstearamid oder Mischungen davon ist.

15. Verfahren zur Herstellung eines Elektretfiltermediums, das folgende Schritte umfasst:

Bereitstellen eines Polymerharzes, das ein eingelagertes ladungsstabilisierendes Fettsäureamid aufweist;

Herstellen eines Gewebes aus schmelzgeblasenen Polymerfasern aus dem Polymerharz, in welchem das ladungsstabilisierende Amid in einer Konzentration von etwa 5 bis etwa 20 Gewichtsprozent vorliegt; und

Behandeln des Gewebes, um in dem schmelzgeblasenen Polymergewebe im Wesentlichen permanente Ladungspaare oder Dipole zu bilden.

16. Verfahren nach Anspruch 15, wobei das Fettsäureamid ein Stearamid, ein Ethylenbisstearamid oder Mischungen davon ist.

17. Verfahren nach Anspruch 15 oder 16, wobei das Polymerharz ein Polypropylen ist.

18. Verfahren nach einem der Ansprüche 15 bis 17, wobei der Schritt der Behandlung des Gewebes unter Verwendung von Wechselstrom- und/oder Gleichstrom-Koronaentladung ausgeführt wird.

19. Verfahren nach Anspruch 18, das weiterhin den Schritt der Behandlung des resultierenden schmelzgeblasenen Polymergewebes bei einer Temperatur im Bereich von etwa 120°C bis 160°C einschließlich für etwa 1 bis 10 Minuten einschließlich umfasst.

20. Verfahren nach Anspruch 18, das weiterhin den Schritt der Wärmebehandlung des schmelzgeblasenen Polymergewebes bei einer Temperatur im Bereich von etwa 135°C bis 145°C einschließlich für etwa 2 bis 3 Minuten einschließlich nach dem Schritt der Behandlung des Gewebes mit einer Wechselstromund/oder Gleichstrom-Koronaentladung umfasst.

21. Verfahren zur Herstellung eines getemperten Elektretfiltermediums, das folgende Schritte umfasst:

Bereitstellen eines Polymerharzes, das ein eingelagertes ladungsstabilisierendes Fettsäureamid aufweist;

Herstellen eines Gewebes aus schmelzgeblasenen Polymerfasern aus dem Polymerharz, in welchem das ladungsstabilisierende Amid mit etwa 5 bis etwa 20 Gewichtsprozent vorliegt;

Behandeln des Gewebes, um in dem schmelzgeblasenen Polymergewebe im Wesentlichen permanente Ladungspaare oder Dipole zu bilden; und

Behandeln des resultierenden schmelzgeblasenen Polymergewebes bei einer erhöhten Temperatur, wodurch das resultierende schmelzgeblasene Polymergewebe getempert wird.

22. Verfahren nach Anspruch 21, wobei das Fettsäureamid ein Stearamid, ein Ethylenbisstearamid oder Mischungen davon ist.

23. Verfahren nach Anspruch 21 oder 22, wobei das Polymerharz ein Polypropylen ist.

24. Verfahren nach einem der Ansprüche 21 bis 23, wobei der Schritt der Behandlung des Gewebes unter Verwendung von Wechselstrom- oder Gleichstrom-Koronaentladung ausgeführt wird.

25. Verfahren nach einem der Ansprüche 21 bis 24, wobei die erhöhte Temperatur im Bereich von

(a) etwa 120°C bis 160°C einschließlich liegt und für etwa 1 bis etwa 10 Minuten einschließlich aufrechterhalten wird.

(b) etwa 135°C bis 145°C einschließlich liegt und für etwa 2 bis etwa 3 Minuten einschließlich aufrechterhalten wird.

**Revendications**

1. Milieu filtrant comprenant une toile en fibre polymère électret traitée par fusion-soufflage, ayant un amide d'acide gras traitable par fusion présent dans ladite toile, où ledit amide est présent à une concentration dans une plage d'environ 5% à environ 20% en poids.

**2.** Milieu filtrant comprenant une toile en fibre polymère électret traitée par fusion-soufflage recuite, ayant un amide d'acide gras traitable par fusion présent dans ladite toile, où ledit amide est présent à une concentration d'environ 5% à environ 20% en poids.

**3.** Milieu filtrant tel que revendiqué dans la revendication 1 ou la revendication 2, dans lequel ladite toile en fibre polymère électret est un polypropylène.

**4.** Milieu filtrant tel que revendiqué dans l'une quelconque des revendications 1-3, **caractérisé en outre par** une stabilité de charge augmentée de ladite toile en fibre polymère électret.

**5.** Milieu filtrant tel que revendiqué dans l'une quelconque des revendications 1-4, dans lequel ledit milieu filtrant a une efficacité de filtre et une valeur de dégradation de

 (a) au moins P 95; ou
 (b) au moins P 99; ou
 (c) au moins P 100

**6.** Milieu filtrant tel que revendiqué dans l'une quelconque des revendications 1-5, dans lequel ladite concentration dudit amide d'acide gras est

 (a) d'entre environ 5% et 11%; ou
 (b) présente à environ 8%.

**7.** Milieu filtrant tel que revendiqué dans l'une quelconque des revendications 1-6, dans lequel ledit amide d'acide gras est soit un stéaramide, un éthylène bis-stéaramide, soit des mélanges de ceux-ci.

**8.** Milieu filtrant tel que revendiqué dans l'une quelconque des revendications 1-7, dans lequel les fibres polymères de ladite toile en fibre polymère ont un diamètre dans la plage d'environ 1 à 20 $\mu$m.

**9.** Milieu filtrant tel que revendiqué dans l'une quelconque des revendications 1-8, dans lequel le poids de ladite toile en fibre polymère est dans la plage d'environ 10 à 520 g/m$^2$.

**10.** Respirateur ayant un élément filtrant comprenant une toile en fibre polymère électret traitée par fusion-soufflage, ayant un amide d'acide gras traitable par fusion présent dans ladite toile, où ledit amide est présent à une concentration dans une plage d'environ 5% à environ 20% en poids.

**11.** Respirateur ayant un élément filtrant comprenant une toile en fibre polymère électret traitée par fusion-soufflage recuite, ayant un amide d'acide gras traitable par fusion présent dans ladite toile, où ledit amide est présent à une concentration dans une plage d'environ 5% à environ 20%, compris, en poids.

**12.** Respirateur tel que revendiqué dans la revendication 10 ou la revendication 11, dans lequel ladite concentration dudit amide d'acide gras est d'entre environ 5% et 11%.

**13.** Respirateur tel que revendiqué dans l'une quelconque des revendications 10-12, dans lequel ladite concentration dudit amide d'acide gras est d'environ 8%.

**14.** Respirateur tel que revendiqué dans l'une quelconque des revendications 10-13, dans lequel ledit amide d'acide gras est soit du stéaramide, de l'éthylène bis-stéaramide, soit des mélanges de ceux-ci.

**15.** Procédé pour la fabrication d'un milieu filtrant électret comprenant les étapes consistant à :

 fournir une résine polymère ayant un amide d'acide gras stabilisateur de charge incorporé dans celle-ci;
 produire une toile de fibres polymères traitées par fusion-soufflage de ladite résine polymère, dans laquelle ledit amide stabilisateur de charge est présent à une concentration d'environ 5% à environ 20% en poids; et
 traiter ladite toile pour former des paires ou des dipôles de charge sensiblement permanente dans ladite toile polymère traitée par fusion-soufflage.

16. Procédé tel que revendiqué dans la revendication 15, dans lequel ledit amide d'acide gras est un stéaramide, un éthylène bis-stéaramide ou des mélanges de ceux-ci.

17. Procédé tel que revendiqué dans la revendication 15 ou la revendication 16, dans lequel ladite résine polymère est un polypropylène.

18. Procédé tel que revendiqué dans l'une quelconque des revendications 15-17, dans lequel l'étape de traitement de ladite toile est exécutée en utilisant une décharge lumineuse CA et/ou CC.

19. Procédé tel que revendiqué dans la revendication 18, comprenant en outre l'étape consistant à traiter ladite toile polymère traitée par fusion-soufflage résultante à une température dans la plage d'entre environ 120°C et 160°C, compris, pendant d'entre environ 1 à 10 minutes, compris.

20. Procédé tel que revendiqué dans la revendication 18, comprenant en outre l'étape consistant à traiter thermiquement ladite toile polymère traitée par fusion-soufflage à une température dans une plage d'entre environ 135°C et 145°C, compris, pendant d'entre environ 2 minutes à environ 3 minutes, compris, suite à ladite étape de traitement de ladite toile avec une décharge lumineuse CA et/ou CC.

21. Procédé pour la fabrication d'un milieu filtrant électret recuit, comprenant les étapes consistant à :

fournir une résine polymère ayant un amide d'acide gras stabilisateur de charge incorporé dans celle-ci;
produire une toile de fibres polymères traitées par fusion-soufflage de ladite résine polymère, dans laquelle ledit amide stabilisateur de charge fait d'environ 5% à environ 20% en poids;
traiter ladite toile pour former des paires ou des dipôles de charge sensiblement permanente dans ladite toile polymère traitée par fusion-soufflage; et
traiter ladite toile polymère traitée par fusion-soufflage résultante à une température élevée, recuisant ainsi ladite toile polymère traitée par fusion-soufflage résultante.

22. Procédé tel que revendiqué dans la revendication 21, dans lequel ledit amide d'acide gras est un stéaramide, un éthylène bis-stéaramide, ou des mélanges de ceux-ci.

23. Procédé tel que revendiqué dans la revendication 21 ou la revendication 22, dans lequel ladite résine polymère est un polypropylène.

24. Procédé tel que revendiqué dans l'une quelconque des revendications 21-23, dans lequel l'étape de traitement de ladite toile est exécutée en utilisant une décharge lumineuse CA et/ou CC.

25. Procédé tel que revendiqué dans l'une quelconque des revendications 21-24, dans lequel ladite température élevée est dans la plage d'entre

(a) environ 120°C à 160°C, compris, et est maintenue pendant d'entre environ 1 minute à environ 10 minutes, compris, ou
(b) environ 135°C à 145°C, compris, et est maintenue pendant d'entre environ 2 minutes à environ 3 minutes, compris.

**FIG. 1**

EP 1 202 788 B1